# FASCICULE DE BREVET EUROPEEN

(11) **EP 3 133 964 B1**
(45) Date de publication et mention de la délivrance du brevet: **31.01.2018**
(21) Numéro de dépôt: 15716842.8
(22) Date de dépôt: 21.04.2015
(51) Int. Cl.: A47J 31/36, A47J 31/44

(54) **DISPOSITIF POUR L'EXTRACTION D'UNE SUBSTANCE À INFUSER**
VORRICHTUNG ZUR EXTRAKTION EINES STOFFES ZUR INFUSION
DEVICE FOR EXTRACTING A SUBSTANCE TO BE INFUSED

(30) Priorité: 22.04.2014 FR 1453607
(43) Date de publication de la demande: 01.03.2017
(73) Titulaire: UNIC S.A.S., 06510 Carros (FR)
(72) Inventeur: LEVI, Jean-Pierre, F-06200 Nice (FR); LEVI, Mario, F-06200 Nice (FR)
(74) Mandataire: Decobert, Jean-Pascal
(86) Numéro de dépôt international: PCT/EP2015/058619
(87) Numéro de publication internationale: WO 2015/162139

(56) Documents cités:
- EP-A1- 2 356 928
- WO-A1-2007/016977
- GB-A- 2 499 005

## Description

### DOMAINE DE L'INVENTION

La présente invention se rapporte à un dispositif pour l'extraction d'une substance à infuser ainsi qu'à une machine de production de boissons. Une application préférée est la fabrication de boissons à partir de café moulu, et plus particulièrement lorsque ledit café moulu est conditionné dans des capsules.

### ARRIERE-PLAN TECHNOLOGIQUE

La manipulation des machines à café impose généralement plusieurs étapes d'opérateur dont le chargement d'une chambre d'extraction avec le café moulu, la fermeture de la chambre en position prête à recevoir une injection d'eau chaude, puis, après l'infusion, un déchargement de la mouture usagée.

L'arrivée sur le marché des conditionnements contenant la mouture à café a sensiblement amélioré ces manipulations en limitant voire en supprimant le contact entre la mouture et la machine à café. Notamment, les phases de chargement et de déchargement de la chambre d'extraction se trouvent facilitées.

Dans certains cas, le conditionnement est sous forme de capsule étanche de sorte qu'elle forme en elle-même le lieu de l'infusion, la machine ne disposant simplement que d'un réceptacle pour la capsule, d'un système d'injection d'eau chaude par une face de la capsule, et d'un conduit d'évacuation de boisson, par une autre face, opposée, de la capsule.

Malgré ces améliorations, les phases d'ouverture et de fermeture de la chambre d'extraction restent souvent complexes. Le document WO-A1-2007/137937 a proposé pour y remédier un dispositif dans lequel la (ou les) chambre d'infusion est formée dans deux parties mobiles l'une par rapport à l'autre. Une partie fixe supérieure chapeaute la chambre d'infusion et est rapportable sur une machine à café. Une autre partie, inférieure, se déplace suivant une cinématique caractéristique pour ouvrir la chambre d'infusion, descendre la deuxième partie puis produire un basculement de la deuxième partie, vers l'avant de la machine. Le chargement et le déchargement de la chambre d'infusion sont facilités depuis la face avant de la machine grâce à cette technique. Le document GB-A-2499005 montre un autre exemple de dispositif comportant une chambre d'infusion formée de deux parties mobiles l'une par rapport à l'autre. Il existe cependant un besoin d'améliorer encore les phases de fonctionnement d'un tel dispositif pour rendre plus pratiques le chargement et le déchargement de la chambre d'extraction.

### RESUME DE L'INVENTION

Un premier aspect de l'invention divulgue un dispositif pour l'extraction d'une substance à infuser, comportant : un logement d'extraction formé dans une première partie et une deuxième partie, la deuxième partie étant mobile relativement à la première partie de sorte à faire passer le logement entre une position fermée et une position ouverte et un dispositif de liaison entre la première partie et la deuxième partie, comportant un support avec une première liaison cinématique configurée pour produire un mouvement de rotation du support relativement à la première partie, et une deuxième liaison cinématique relativement à la deuxième partie. Selon l'invention, le dispositif de liaison comporte une articulation configurée pour produire successivement, lors d'un mouvement de rotation du support autour de la première liaison cinématique suivant un premier sens de rotation, depuis la position fermée du logement, un premier mouvement de basculement de la deuxième partie dans le premier sens de rotation, puis un deuxième mouvement de basculement de la deuxième partie dans un deuxième sens de rotation opposé au premier sens.

Ainsi, l'invention enchaîne deux positions permettant le déchargement puis le chargement, à partir d'un seul mouvement de l'opérateur.

Suivant un autre aspect, est présentée une machine de production de boisson par infusion d'une substance, comportant un dispositif tel que décrit précédemment.

D'autres aspects sont relatifs à un procédé d'extraction d'une substance à infuser.

### INTRODUCTION DES DESSINS

Les dessins ci-joints sont donnés à titre d'exemples et ne sont pas limitatifs de l'invention. Ils représentent seulement un mode de réalisation de l'invention et permettront de la comprendre aisément.
- La figure 1 illustre en perspective une machine de l'invention ;
- la figure 2 présente en position fermée un mode de réalisation du dispositif d'extraction ;
- la figure 3 est une vue en coupe, ouvrant un plan vertical, du dispositif en position fermée ;
- la figure 4 est une perspective éclatée montrant un mode de réalisation du dispositif de liaison de l'invention, entre deux parties du dispositif d'extraction ;
- les figures 5 à 13 présentent des phases successives de fonctionnement du dispositif depuis une position fermée puis en retour vers la position fermée ;
- la figure 14 représente une partie d'un mode de réalisation de l'invention, avec une liaison freinée.

### DESCRIPTION DETAILLEE

Avant d'entrer dans le détail de modes de réalisation de l'invention, notamment en référence aux dessins, sont ci-après introduites des options possibles pour l'invention; elles ne sont pas limitatives et peuvent être mises en oeuvre seules ou suivant toutes combinaisons entre elles.
- l'articulation comprend une came 21 dont une première extrémité 22 est montée en rotation par une première liaison pivot 18 relativement à la première partie 1 et dont une deuxième extrémité 23 en rotation par une deuxième liaison pivot 27 relativement à la deuxième partie 2 ;
- la deuxième liaison pivot 27 de la came 21 est freinée et l'articulation comporte un limiteur agencé pour stopper le débattement angulaire de la came 21 avec le mouvement de rotation du support 8, un débattement angulaire de la came 21 entraîné par le mouvement de rotation du support 8, un mouvement de la came 21 après l'action du limiteur étant configuré pour produire le deuxième mouvement de basculement ;
- la came 21 comporte un corps 24 de profil convexe entre sa première et sa deuxième extrémité 22, 23, le corps 24 comprenant une butée 26 agencée pour coopérer avec une butée complémentaire 17 pour former le limiteur ;
- la butée complémentaire 17 et la première liaison pivot 18 de la came 21 sont portées par une pièce de flanc 14 fixe relativement à la première partie 1.
- l'articulation est configurée pour produire un troisième mouvement de basculement de la deuxième partie 2, après le deuxième basculement, au cours d'un mouvement de rotation du support 8 autour de la première liaison cinématique 9 suivant le deuxième sens de rotation 40, le troisième basculement étant suivant le deuxième sens de rotation 40 ;
- il comprend un système d'arrêt en position relative de la première partie 1 et de la deuxième partie 2 après le troisième mouvement de basculement ;
- le système d'arrêt comporte une butée 45 portée par la deuxième partie 2 et une surface d'arrêt solidaire de la première partie 1 ;
- l'articulation est configurée pour produire un quatrième mouvement de basculement de la deuxième partie 2 dans le premier sens de rotation 39, au cours d'un mouvement de rotation du support 8 autour de la première liaison cinématique 9 suivant le deuxième sens de rotation 40 ;
- la première liaison cinématique 9 est un pivot ;
- la première liaison cinématique 9 est un pivot d'axe horizontal ;
- le support 8 comporte un levier 37 doté d'une poignée 38 de préhension ;
- le mouvement de rotation du support 8 est dirigé de sorte à relever la poignée 38 de préhension ;
- la deuxième articulation est un pivot glissant.
- le dispositif comporte un deuxième support et un deuxième dispositif de liaison, le deuxième support et le deuxième dispositif de liaison étant situés sur un côté du dispositif opposé à un côté du dispositif où sont situés le support et le dispositif de liaison ;
- le logement 4 est configuré pour recevoir une capsule 35 de conditionnement de matière à infuser ;
- le logement 4 comporte, au niveau d'une face arrière 6 de la deuxième partie 2, une ouverture agencée pour autoriser la chute par gravité d'une capsule 35 à la fin du premier mouvement de basculement ;
- le logement 4 comporte un axe longitudinal vertical en position fermée ;
- le dispositif comporte au moins un logement additionnel.

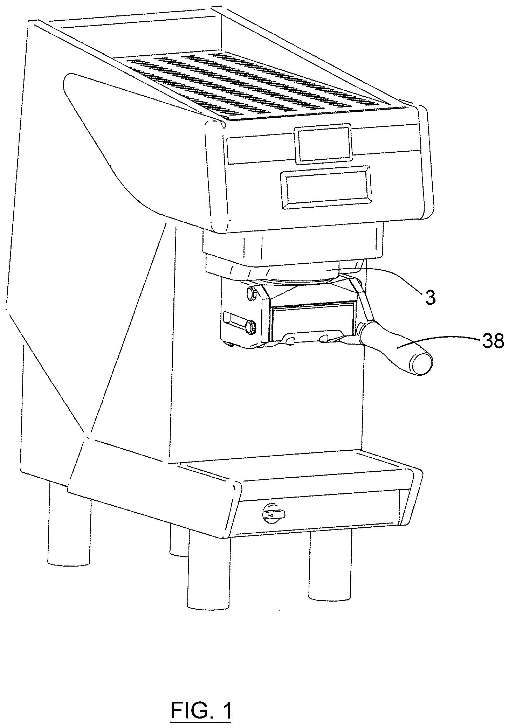

Les dessins présentent une application de l'invention à une machine à café avec une injection d'eau suivant une direction verticale. Par ailleurs, les illustrations se réfèrent à l'emploi de capsules au sein desquelles se produit l'infusion. La machine représentée, par exemple en figure 1, comprend ainsi un dispositif raccordé par une interface 3 au reste de machine et susceptible de recevoir simultanément deux capsules.

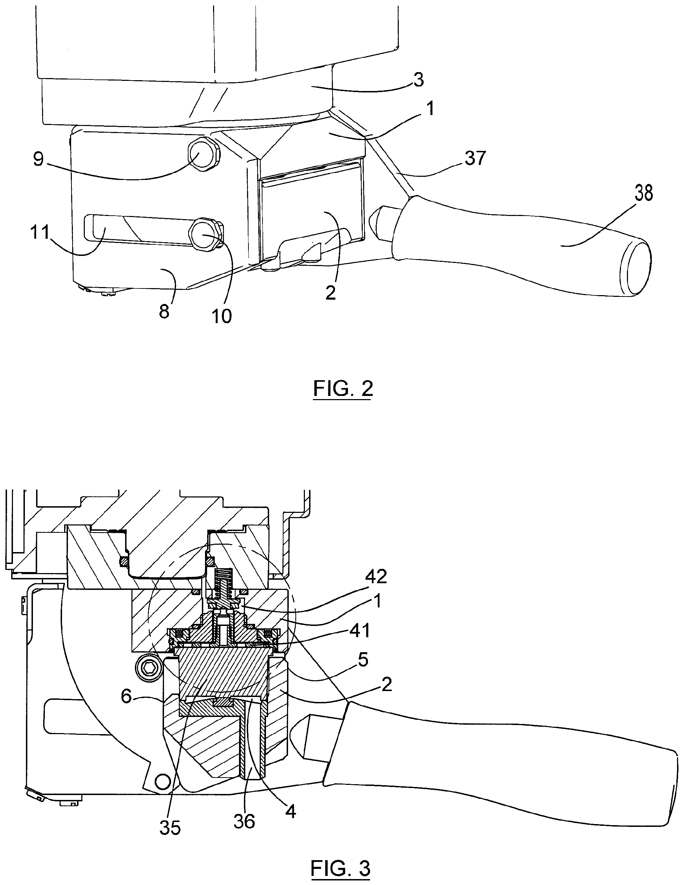

La figure 1 révèle en outre que, dans un cas avantageux, la manipulation s'effectue grâce à une seule poignée 38, par la façade de la machine. Il n'est pas exclu qu'une machine puisse comporter plusieurs dispositifs d'extraction et/ou qu'elle comporte des moyens de motorisation remplaçant la poignée 38.Les figures 2 et 3 montrent plus particulièrement que le dispositif comporte deux parties 1 et 2. La première partie 1 est préférentiellement fixe par rapport au reste de la machine avec laquelle elle s'interface. La deuxième partie 2, ici en dessous de la première partie 1, est mobile relativement à cette dernière. La deuxième partie 2 comporte une ou plusieurs cavités aptes chacune à recevoir une capsule 35 dans le cas illustré ou directement de la mouture. Chaque cavité forme une portion d'un logement 4 dont une autre portion est réalisée dans la première partie 1. Dans les figures, la partie 1 ferme les logements 4, à l'embouchure des cavités de la deuxième partie 2.

La première partie 1 comporte avantageusement un dispositif 42 pour l'injection d'eau chaude dans la mouture à infuser. Ce dispositif 42 réside dans la zone entourée en figure 3 et comportant par exemple : un canal d'injection d'eau, une valve d'ouverture du canal en cas de présence d'une capsule, des éléments d'étanchéité et une douchette 41 applicable sur le dessus de la capsule 35 dans le cas d'espèce. Suivant la technologie de capsule, des moyens supplémentaires, en particulier de percement de la face supérieure de la capsule 35, peuvent être mise en oeuvre.

En partie basse, le logement 4 comporte un canal de sortie 36 pour la boisson.

De manière préférée, le logement 4 comporte en outre une ouverture, au niveau d'une face arrière 6 de la deuxième partie 2. A cet endroit, la cavité est échancrée de sorte à ne coopérer qu'avec une portion limitée de la capsule 35. En particulier, l'ouverture est limitée vers le haut par un rebord 43 servant de butée à la capsule 35 lors d'une inclinaison limitée du logement 4. Néanmoins, si l'inclinaison du logement 4 vers la face arrière 6 dépasse une certaine valeur angulaire, la capsule 35 bascule au-delà du rebord 43 et chute sous l'effet de la gravité.

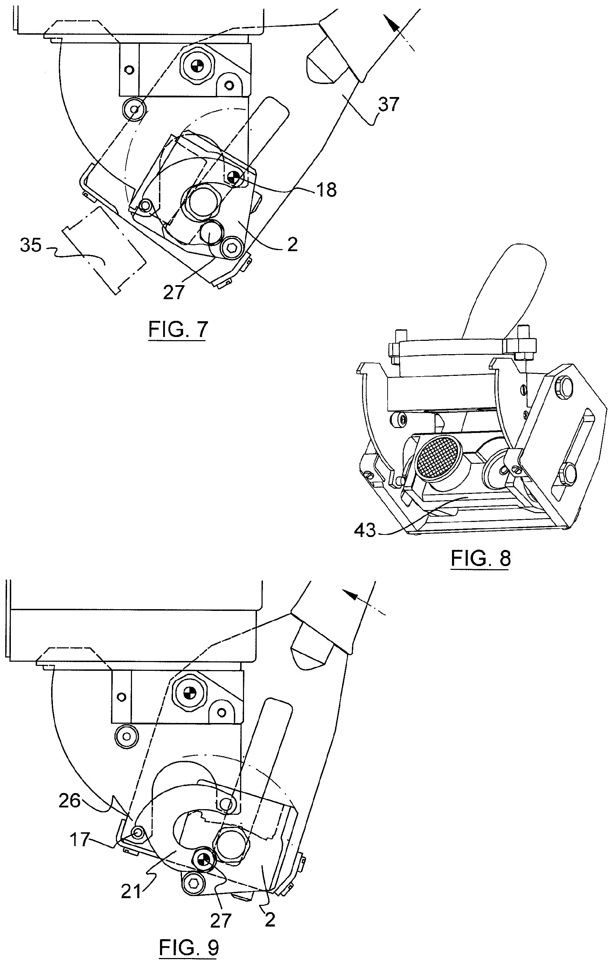

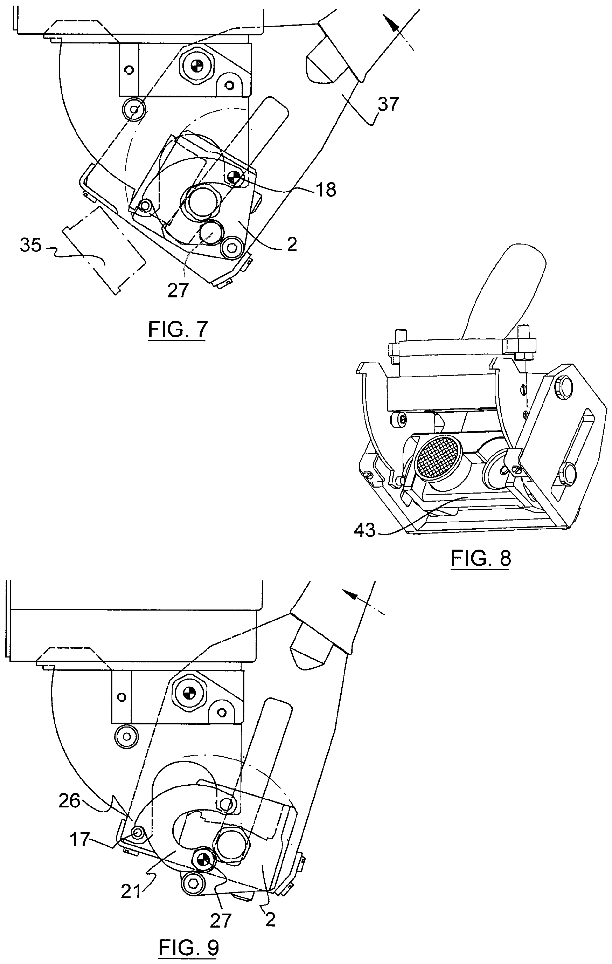

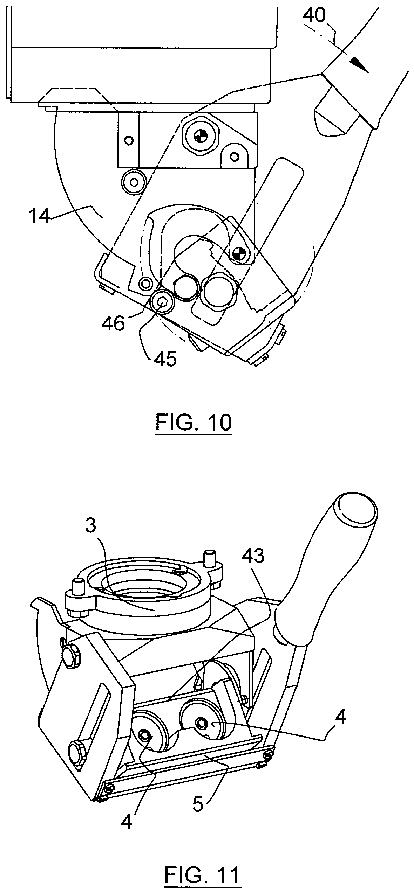

Les figures 8 et 11 montrent que le rebord 43 peut être commun à plusieurs logements 4. Sa hauteur est en outre préférentiellement limitée et avantageusement située en deçà de la position du centre de gravité de la capsule 35, pour opérer la chute par basculement.

On comprend que la position de la deuxième partie 2 influe sur les phases de fonctionnement. Ainsi, un basculement tel qu'indiqué précédemment permet d'éjecter la capsule 35. En outre, un basculement de sens opposé assure une mise en position de chargement facile. L'invention permet d'enchaîner ces phases au cours d'un mouvement de rotation dans un seul sens pour la poignée 38 tout en produisant deux basculements de sens opposés de la deuxième partie 2. On peut ainsi produire une éjection de capsule 35 par la face arrière puis un retour en position de chargement, vers la face avant 5, au cours d'un même mouvement d'opérateur. Un avantage est notamment de recevoir les capsules usagées vers l'arrière de la machine et non directement en façade.

Pour y parvenir, le dispositif met en oeuvre une cinématique caractéristique dont un exemple est décrit ci-après. La réalisation structurelle des figures n'est pas limitative, mais fournit un exemple de dispositif de liaison, joignant la première partie 1 et la deuxième partie 2 en offrant les mobilités souhaitées.

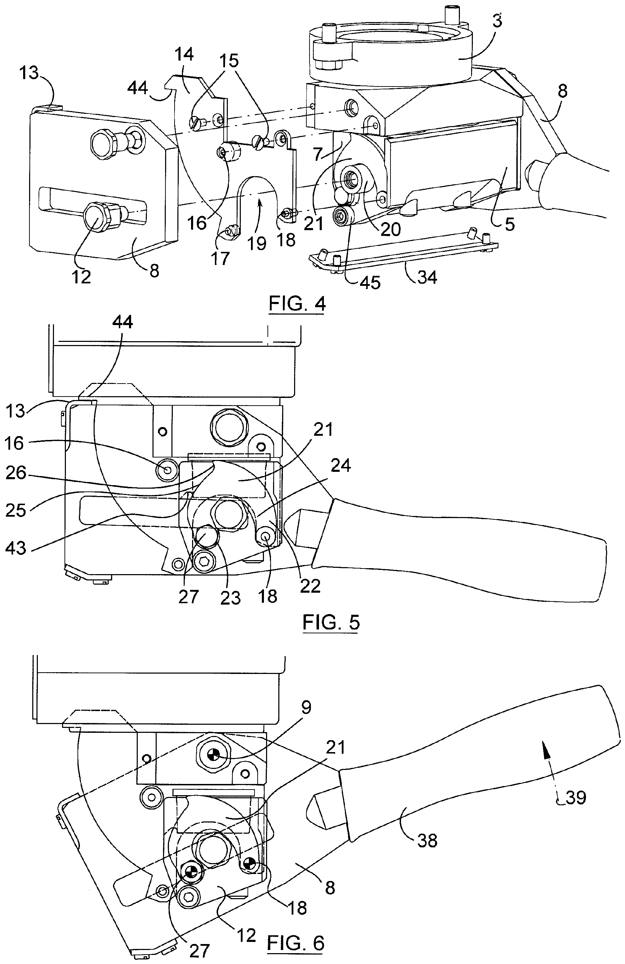

Une première partie du dispositif de liaison comporte au moins un support 8 (deux dans les illustrations, chacun d'un côté 7 opposé de la deuxième partie 2), par exemple sous forme d'une pièce plane rapportée sur le côté 7de la deuxième partie. Le support 8 est articulé sur la première partie 1 par une première liaison cinématique 9. La figure 4 en montre une réalisation avec une vis fixable dans la première partie 1 et préservant un palier pour coopérer avec un trou dans le support 8. Le support 8 est aussi relié à la deuxième partie 2, par une deuxième liaison cinématique 10. Dans le cas des figures, il s'agit d'un trou oblong 11 dans le support 8 permettant le débattement en translation d'un axe 12 monté en rotation par une partie vissée sur un arbre 20 formé dans la deuxième partie 2. Cela forme un pivot glissant.

Avantageusement, un support 8 est solidaire d'une partie de levier 37 se terminant par une poignée 38 pour entraîner le support 8 en rotation relativement à la première partie 1.

Dans le cas d'une paire de supports 8, qui est avantageux pour équilibrer le dispositif, les supports 8 sont solidarisés, par exemple via une traverse de liaison 34.

Le dispositif de liaison comporte d'autres moyens permettant d'opérer les phases de basculement de la deuxième partie 2. Ainsi, la figure 4 illustre une came 21, ici sous forme d'un corps convexe 24 avec une première extrémité 22, vers la face avant 5, qui est montée pivotante relativement à la première partie 1, par une première liaison pivot 18. Une deuxième extrémité 23 de la came 21 est située plus vers la face arrière 6 et est le lieu d'une deuxième liaison pivot 27 entre la came 21 et la deuxième partie 2.

Avantageusement, une pièce de flanc 14 est rapportée sur la première partie 1 notamment pour recevoir la première liaison pivot 18. La pièce de flanc 14 est par exemple une plaque solidaire par des vis 15 de la première partie 1.

La pièce de flanc 14 peut aussi recevoir un pion de guidage 16, une butée 17 ou encore un arrêt 44 exposés plus loin dans la description.

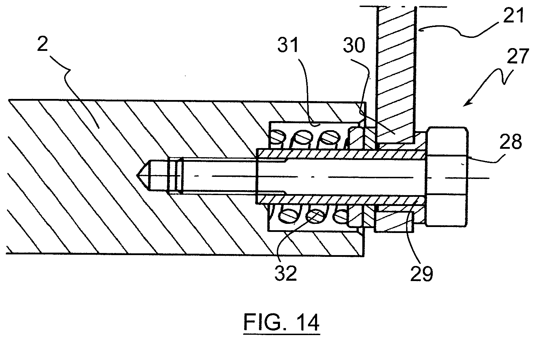

On comprend que la came 21 ainsi montée fournit une deuxième liaison entre première et deuxième parties 1, 2, en plus de l'articulation composée de la première et deuxième liaisons cinématiques 9, 10. Cela permet d'enchaîner des mouvements relatifs de la première et deuxième parties 1, 2 comme ci-après détaillé en référence aux figures 5 à 13. Auparavant, il est précisé que la deuxième liaison pivot 27 est avantageusement freinée, c'est-à-dire qu'il faut surmonter un niveau de frottement prédéterminé pour l'actionner et opérer un pivot à cet endroit. La figure 14 présente une possibilité de réalisation avec une cavité 32 dans la deuxième partie 2 recevant une vis 28 fixée en fond de cavité 32 dans un trou taraudé. La vis 28 offre une section coopérant avec un trou de la came 21. Préférentiellement, une pièce de palier 29 est intercalée à cet endroit pour le guidage en rotation de la came 21. Un ressort 31 est monté dans la cavité 12, en entourant la vis, de sorte à exercer un appui élastique sur une rondelle 30 configurée pour s'appliquer avec frottement sur une face de la came 21 de sorte à produire une résistance au mouvement de rotation autour du palier 29.

Un exemple de fonctionnement est maintenant décrit à partir d'une situation dans laquelle le logement 4 est formé, comme c'est le cas en figure 5. A cette figure, la poignée 38 est abaissée et le support 8 est en appui sur l'arrêt 44 de la pièce de flanc 14, par une surface d'appui 13. Les faces en vis-à-vis des première et deuxième parties 1, 2 sont sensiblement parallèles et rapprochées de sorte à fermer le logement 4. Une infusion peut se produire dans cette configuration.

Sous l'impulsion d'un mouvement sur la poignée 38, ici vers le haut, suivant un sens de rotation 39, la figure 6 montre une phase suivante ouvrant le logement 4 en éloignant les parties 1 et 2. Le relevage de la poignée 38 produit une rotation autour de la liaison 9. La vis 12 se déplace progressivement dans le trou 11.

Néanmoins, la première partie 1 ne pivote pas à ce stade car sa rotation est empêchée par le pion de guidage 16 contre lequel sa surface arrière 6 s'applique, si bien que la mobilité de la deuxième partie 2 est alors essentiellement une translation verticale. Les liaisons 18 et 27 sont elles-mêmes peu ou pas sollicitées.

La poursuite de la rotation de la poignée 38 fait la deuxième partie 2 s'échapper du pion 16 et met en action la came 21 autour de la liaison 18. La liaison 27 étant freinée, elle reste fixe. De la sorte, la deuxième partie 2 peut suivre le mouvement de rotation de la poignée 38 et opérer un premier mouvement de basculement vers l'arrière, suivant le premier sens de rotation 39. Ce mouvement de basculement atteint un débattement angulaire de la deuxième partie 2 suffisant pour que la (ou les) capsule(s) 35 s'échappe(nt) du (ou des) logement(s) 8, comme illustré en figure 7. La figure 8 montre en perspective la forte inclinaison de la deuxième partie 2 provoquant la chute.

Dans la configuration de la figure 7 et de la figure 8, le premier mouvement de basculement ne se poursuit pas. En effet, à la fin de cette phase, la came 21 est mise en butée sur une butée 17 complémentaire d'une butée 26 portée par la came 21. Plus particulièrement, dans le cas illustré, la came 21 comporte une échancrure 19 autour de l'arbre 20, la butée 26 étant en saillie relativement à un retrait 25 sur la bordure de la came 21.

La figure 9 montre que de par la mise en butée de la came 21, la poursuite de la rotation de la poignée 38 force le pivot de la deuxième liaison 27 qui se met en mouvement. Cela provoque un redressement de la deuxième partie 2, suivant un deuxième mouvement de basculement, de sens inverse, suivant le sens 40 repéré en figure 10. En fin de relevage de la poignée 38, la deuxième liaison cinématique 10 est en fin de course et le mouvement ne peut se poursuivre. Pour autant, la deuxième partie 2 est déjà réorientée vers l'avant de la machine à ce stade.

Ensuite, comme révélé aux figures 10 et 11, une rotation inverse de la poignée 38 (et donc du support 8) par exemple par simple relâchement de l'opérateur, suivant le sens 40, fait redescendre la poignée 38 jusqu'à une position intermédiaire d'attente de chargement de capsule 35. Cette situation est stable car une butée 45 solidaire de la deuxième partie 2 y est en appui sur un arrêt formé sur la pièce de flanc 14. La liaison 27 étant freinée, ce mouvement de redescente entraîne avec lui la deuxième partie suivant le sens 40 si bien que le logement 4 se trouve, en fin de ce troisième mouvement de basculement, très largement ouvert vers la face avant 5 comme le montre la figure 11.

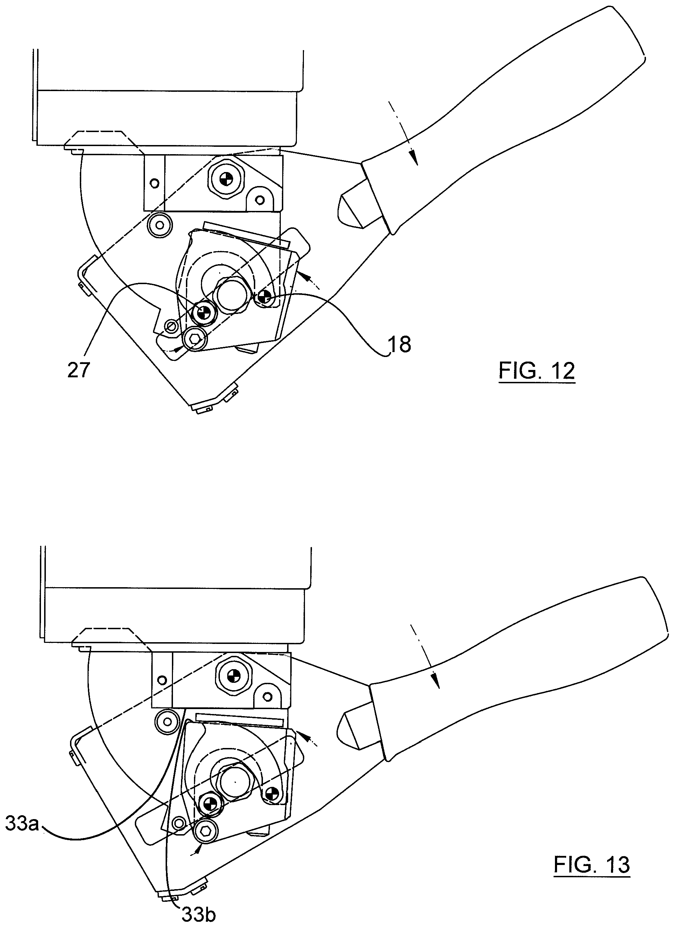

Un léger effort supplémentaire de l'opérateur pour abaisser la poignée 38 dégage la butée 45 et induit, par mise en oeuvre des première et deuxième liaisons pivot 18 et 27, un quatrième mouvement de basculement de la deuxième partie 2 comme en figure 12.

Ce mouvement se poursuit jusqu'à revenir vers la position fermée, suivant le mouvement de la figure 13 jusqu'à la configuration de la figure 5, dans laquelle les faces 33a et 33b des parties 1 et 2 finissent par accoster.

**REFERENCES**

| | | | |
|---|---|---|---|
| 1. | Première partie | 24. | Corps convexe |
| 2. | Deuxième partie | 25. | Retrait |
| 3. | Interface | 26. | Butée |
| 4. | Logement | 27. | Deuxième liaison pivot |
| 5. | Face avant | 28. | Vis |
| 6. | Face arrière | 29. | Palier |
| 7. | Côté | 30. | Rondelle de freinage |
| 8. | Support | 31. | Ressort |
| 9. | Première liaison cinématique | 32. | Cavité |
| | | 33a, 33b. | Face d'accostage |
| 10. | Deuxième liaison cinématique | 34. | Traverse de liaison |
| | | 35. | Capsule |
| 11. | Trou oblong | 36. | Canal de sortie |
| 12. | Axe de pivot | 37. | Levier |
| 13. | Surface d'appui | 38. | Poignée |
| 14. | Pièce de flanc | 39. | Premier sens de rotation |
| 15. | Vis | 40. | Deuxième sens de |
| 16. | Pion de guidage | | rotation |
| 17. | Butée complémentaire | 41. | Douchette |
| 18. | Première liaison pivot | 42. | Système d'injection d'eau |
| 19. | Echancrure | 43. | Rebord |
| 20. | Arbre | 44. | Arrêt |
| 21. | Came | 45. | Butée |
| 22. | Première extrémité | 46. | Arrêt |
| 23. | Deuxième extrémité | | |

## Revendications

1. Dispositif pour l'extraction d'une substance à infuser, comportant :
- un logement (4) d'extraction formé dans une première partie (1) et une
deuxième partie (2), la deuxième partie (2) étant mobile relativement à la première partie (1) de sorte à faire passer le logement (4) entre une position fermée et une position ouverte ;
- un dispositif de liaison entre la première partie (1) et la deuxième partie (2), comportant un support (8) avec une première liaison cinématique (9) configurée pour produire un mouvement de rotation du support (8) relativement à la première partie, et une deuxième liaison cinématique (10) relativement à la deuxième partie (2),
**caractérisé en ce que** le dispositif de liaison comporte une articulation configurée pour produire successivement, lors d'un mouvement de rotation du support (8) autour de la première liaison cinématique (9) suivant un premier sens de rotation (39), depuis la position fermée du logement (4), un premier mouvement de basculement de la deuxième partie (2) dans le premier sens de rotation (39), puis un deuxième mouvement de basculement de la deuxième partie (2) dans un deuxième sens de rotation (40) opposé au premier sens.

2. Dispositif selon la revendication précédente dans lequel l'articulation comprend une came (21) dont une première extrémité (22) est montée en rotation par une première liaison pivot (18) relativement à la première partie (1) et dont une deuxième extrémité (23) en rotation par une deuxième liaison pivot (27) relativement à la deuxième partie (2).

3. Dispositif selon la revendication précédente, dans lequel la deuxième liaison pivot (27) de la came (21) est freinée et dans lequel l'articulation comporte un limiteur agencé pour stopper le débattement angulaire de la came (21) avec le mouvement de rotation du support (8), un débattement angulaire de la came (21) entraîné par le mouvement de rotation du support (8) formant le premier mouvement de basculement, un mouvement de la came (21) après l'action du limiteur étant configuré pour produire le deuxième mouvement de basculement.

4. Dispositif selon la revendication précédente dans lequel la came (21) comporte un corps (24) de profil convexe entre sa première et sa deuxième extrémité (22, 23), le corps (24) comprenant une butée (26) agencée pour coopérer avec une butée complémentaire (17) pour former le limiteur et de préférence dans lequel la butée complémentaire (17) et la première liaison pivot (18) de la came (21) sont portées par une pièce de flanc (14) fixe relativement à la première partie (1).

5. Dispositif selon l'une des revendications précédentes dans lequel l'articulation est configurée pour produire un troisième mouvement de basculement de la deuxième partie (2), après le deuxième basculement, au cours d'un mouvement de rotation du support (8) autour de la première liaison cinématique (9) suivant le deuxième sens de rotation (40), le troisième basculement étant suivant le deuxième sens de rotation (40).

6. Dispositif selon la revendication précédente comportant un système d'arrêt en position relative de la première partie (1) et de la deuxième partie (2) après le troisième mouvement de basculement, et de préférence dans lequel le système d'arrêt comporte une butée (45) portée par la deuxième partie (2) et une surface d'arrêt (46) solidaire de la première partie (1).

7. Dispositif selon l'une des deux revendications précédentes dans lequel l'articulation est configurée pour produire un quatrième mouvement de basculement de la deuxième partie (2) dans le premier sens de rotation (39), au cours d'un mouvement de rotation du support (8) autour de la première liaison cinématique (9) suivant le deuxième sens de rotation (40).

8. Dispositif selon l'une des revendications précédentes dans lequel la première liaison cinématique (9) est un pivot.

9. Dispositif selon la revendication précédente dans lequel la première liaison cinématique (9) est un pivot d'axe horizontal.

10. Dispositif selon la revendication précédente dans lequel le support (8) comporte un levier (37) doté d'une poignée (38) de préhension, et de préférence dans lequel le mouvement de rotation du support (8) est dirigé de sorte à relever la poignée (38) de préhension.

11. Dispositif selon l'une des revendications précédentes dans lequel la deuxième articulation est un pivot glissant.

12. Dispositif selon l'une des revendications précédentes comportant un deuxième support et un deuxième dispositif de liaison, le deuxième support et le deuxième dispositif de liaison étant situés sur un côté du dispositif opposé à un côté du dispositif où sont situés le support et le dispositif de liaison.

13. Dispositif selon l'une des revendications précédentes dans lequel le logement (4) est configuré pour recevoir une capsule (35) de conditionnement de matière à infuser, et de préférence dans lequel le logement (4) comporte, au niveau d'une face arrière (6) de la deuxième partie (2), une ouverture agencée pour autoriser la chute par gravité d'une capsule (35) à la fin du premier mouvement de basculement.

14. Dispositif selon l'une des revendications précédentes comportant au moins un logement additionnel.

15. Machine de production de boisson par infusion d'une substance, comportant un dispositif selon l'une des revendications précédentes.

## Patentansprüche

1. Vorrichtung zur Extraktion eines Stoffes zur Infusion, umfassend:
- eine Extraktionsaufnahme (4), die in einem ersten Teil (1) und einem zweiten Teil (2) gebildet ist, wobei der zweite Teil (2) in Bezug auf den ersten Teil (1) derart beweglich ist, dass er die Aufnahme (4) zwischen einer geschlossenen Position und einer offenen Position übergehen lässt;
- eine Verbindungsvorrichtung zwischen dem ersten Teil (1) und dem zweiten Teil (2), die einen Träger (8) mit einer ersten kinematischen Verbindung (9) umfasst, die konfiguriert ist, um eine Drehbewegung des Trägers (8) in Bezug auf den ersten Teil zu erzeugen, und mit einer zweiten kinematischen Verbindung (10) in Bezug auf den zweiten Teil,
**dadurch gekennzeichnet, dass** die Verbindungsvorrichtung eine Anlenkung umfasst, die konfiguriert ist, um nacheinander, bei einer Drehbewegung des Trägers (8) um die erste kinematische Verbindung (9) entlang einer ersten Drehrichtung (39) ab der geschlossenen Position der Aufnahme (4) eine erste Kippbewegung des zweiten Teils (2) in die erste Drehrichtung (39) zu erzeugen, dann eine zweite Kippbewegung des zweiten Teils (2) in eine zweite Drehrichtung (40), die zu der ersten Drehrichtung entgegengesetzt ist.

2. Vorrichtung nach dem vorhergehenden Anspruch, bei der die Anlenkung einen Nocken (21) umfasst, dessen erstes Ende (22) in Drehung durch eine erste Schwenkverbindung (18) in Bezug auf den ersten Teil (1) montiert ist, und dessen zweites Ende (23) in Drehung durch eine zweite Schwenkverbindung (27) in Bezug auf den zweiten Teil (2) montiert ist.

3. Vorrichtung nach dem vorhergehenden Anspruch, wobei die zweite Schwenkverbindung (27) des Nockens (21) gebremst ist, und wobei die Anlenkung einen Begrenzer umfasst, der eingerichtet ist, um das Winkelausschlagen des Nockens (21) mit der Drehbewegung des Trägers (8) zu stoppen, ein Winkelausschlagen des Nockens (21), der von der Drehbewegung des Trägers (8) angetrieben wird, die erste Kippbewegung bildet, wobei eine Bewegung des Nockens (21) und nach der Aktion des Begrenzers konfiguriert ist, um die zweite Kippbewegung zu erzeugen.

4. Vorrichtung nach dem vorhergehenden Anspruch, wobei der Nocken (21) einen Körper (24) mit konvexem Profil zwischen seinem ersten und seinem zweiten Ende (22, 23) umfasst, wobei der Körper (24) einen Anschlag (26) umfasst, der eingerichtet ist, um mit einem komplementären Anschlag (17) zusammenzuwirken, um den Begrenzer zu bilden, und wobei bevorzugt der komplementäre Anschlag (17) und die erste Schwenkverbindung (18) des Nockens (21) von einem Flankenteil (14), das in Bezug auf den ersten Teil (1) stationär ist, getragen werden.

5. Vorrichtung nach einem der vorhergehenden Ansprüche, wobei die Anlenkung konfiguriert ist, um eine dritte Kippbewegung des zweiten Teils (2) nach dem zweiten Kippen im Laufe einer Drehbewegung des Trägers (8) um die erste kinematische Verbindung (9) entlang der zweiten Drehrichtung (40) zu erzeugen, wobei das dritte Kippen entlang der zweiten Drehrichtung (40) erfolgt.

6. Vorrichtung nach dem vorhergehenden Anspruch, die ein Stoppsystem in Position in Bezug auf den ersten Teil (1) und den zweiten Teil (2) nach der dritten Kippbewegung umfasst, und wobei das Stoppsystem bevorzugt einen Anschlag (45) umfasst, der von dem zweiten Teil (2) und einer Stoppfläche (46), die fest mit dem ersten Teil (1) verbunden ist, getragen wird.

7. Vorrichtung nach einem der zwei vorhergehenden Ansprüche, bei der die Anlenkung konfiguriert ist, um eine vierte Kippbewegung des zweiten Teils (2) in die erste Drehrichtung (39) im Laufe einer Drehbewegung des Trägers (8) um die erste kinematische Verbindung (9) entlang der zweiten Drehrichtung (40) zu erzeugen.

8. Vorrichtung nach einem der vorhergehenden Ansprüche, wobei die erste kinematische Verbindung (9) ein Zapfen ist.

9. Vorrichtung nach dem vorhergehenden Anspruch, wobei die erste kinematische Verbindung (9) ein Zapfen mit horizontaler Achse ist.

10. Vorrichtung nach dem vorhergehenden Anspruch, wobei der Träger (8) einen Hebel (37) umfasst, der mit einem Griff (38) versehen ist, und wobei die Drehbewegung des Trägers (8) bevorzugt derart gelenkt wird, dass der Griff (38) angehoben wird.

11. Vorrichtung nach einem der vorhergehenden Ansprüche, wobei die zweite Anlenkung ein Gleitzapfen ist.

12. Vorrichtung nach einem der vorhergehenden Ansprüche, die einen zweiten Träger und eine zweite Verbindungsvorrichtung umfasst, wobei der zweite Träger und die zweite Verbindungsvorrichtung auf einer Seite der Vorrichtung, die einer Seite der Vorrichtung entgegengesetzt ist, an der sich der Träger und die Verbindungsvorrichtung befinden, liegen.

13. Vorrichtung nach einem der vorhergehenden Ansprüche, wobei die Aufnahme (4) konfiguriert ist, um eine Verpackungskapsel (35) von Stoff zur Infusion aufzunehmen, und wobei die Aufnahme (4) bevorzugt im Bereich einer Rückseite (6) des zweiten Teils (2) eine Öffnung umfasst, die eingerichtet ist, um das schwerkraftbedingte Herunterfallen einer Kapsel (35) am Ende der ersten Kippbewegung zu gestatten.

14. Vorrichtung nach einem der vorhergehenden Ansprüche, die mindestens eine zusätzliche Aufnahme umfasst.

15. Maschine zum Erzeugen eines Getränks durch Infusion eines Stoffs, die eine Vorrichtung nach einem der vorhergehenden Ansprüche umfasst.

## Claims

1. Device for the extraction of a substance to be infused, comprising:
- an extraction housing (4) formed in a first portion (1) and a second portion (2), the second portion (2) being mobile with respect to the first portion (1) in such a way as to make the housing (4) go between a closed position and an open position;
- a connecting device between the first portion (1) and the second portion (2), comprising a support (8) with a first kinematic link (9) configured to produce a movement of rotation of the support (8) with respect to the first portion, and a second kinematic link (10) with respect to the second portion (2),
**characterised in that** the connecting device comprises an articulation configured to successively produce, during a movement of rotation of the support (8) about the first kinematic link (9) in a first direction of rotation (39), from the closed position of the housing (4), a first movement of swinging of the second portion (2) in a first direction of rotation (39), then a second movement of swinging of the second portion (2) in a second direction of rotation (40) opposite to the first direction.

2. Device according to the previous claim, wherein the articulation comprises a cam (21), a first end (22) of which is rotatably mounted by a first pivot link (18) with respect to the first portion (1) and a second end (23) of which in rotation by a second pivot link (27) with respect to the second portion (2).

3. Device according to the previous claim, wherein the second pivot link (27) of the cam (21) is braked and in which the articulation comprises a limiter arranged to stop the angular movement of the cam (21) with the movement of rotation of the support (8), an angular movement of the cam (21) driven by the movement of rotation of the support (8) forming the first swinging movement, and a movement of the cam (21) after the action of the limiter being configured to produce the second swinging movement.

4. Device according to the previous claim, wherein the cam (21) comprises a body (24) having a convex profile between its first and its second end (22, 23), the body (24) comprising a stop (26) arranged to cooperate with a complementary stop (17) in order to form the limiter and preferably wherein the complementary stop (17) and the first pivot link (18) of the cam (21) are carried by a side part (14) stationary with respect to the first portion (1).

5. Device according to one of the previous claims, wherein the articulation is configured to produce a third movement of swinging of the second portion (2), after the second swinging, during a movement of rotation of the support (8) about the first kinematic link (9) in the second direction of rotation (40), the third swinging being in the second direction of rotation (40).

6. Device according to the previous claim, comprising a system for stopping the first portion (1) and the second portion (2) in the relative position after the third swinging movement, and preferably wherein the stopping system comprises a stop (45) carried by the second portion (2) and a stopping surface (46) rigidly connected to the first portion (1).

7. Device according to one of the two previous claims, wherein the articulation is configured to produce a fourth movement of swinging of the second portion (2) in the first direction of rotation (39), during a movement of rotation of the support (8) about the first kinematic link (9) in the second direction of rotation (40).

8. Device according to one of the previous claims, wherein the first kinematic link (9) is a pivot.

9. Device according to the previous claim, wherein the first kinematic link (9) is a pivot having a horizontal axis.

10. Device according to the previous claim, wherein the support (8) comprises a lever (37) provided with a gripping handle (38), and preferably wherein the movement of rotation of the support (8) is directed in such a way as to lift the gripping handle (38).

11. Device according to one of the previous claims, wherein the second articulation is a sliding pivot.

12. Device according to one of the previous claims, comprising a second support and a second connecting device, the second support and the second connecting device being located on a side of the device opposite to a side of the device on which the support and the connecting device are located.

13. Device according to one of the previous claims, wherein the housing (4) is configured to receive a capsule (35) for packaging a substance to be infused, and preferably wherein the housing (4) comprises, at a rear face (6) of the second portion (2), an opening arranged to allow the fall, via gravity, of a capsule (35) at the end of the first swinging movement.

14. Device according to one of the previous claims, comprising at least one additional housing.

15. Machine for producing a drink via infusion of a substance, comprising a device according to one of the previous claims.
